# EUROPÄISCHE PATENTSCHRIFT

(11) **EP 1 952 697 B1**
(45) Veröffentlichungstag und Bekanntmachung des Hinweises auf die Patenterteilung: **24.08.2011**
(21) Anmeldenummer: 08100749.4
(22) Anmeldetag: 22.01.2008
(51) Int. Cl.: A23G 1/20, A23G 3/20, A23G 3/26, B65G 45/12

(54) **Dragiervorrichtung**
Coating device
Dispositif de dragéification

(30) Priorität: 01.02.2007 DE 102007005023
(43) Veröffentlichungstag der Anmeldung: 06.08.2008
(73) Patentinhaber: Lothar A. Wolf Spezialmaschinen GmbH, 32108 Bad Salzuflen (DE)
(72) Erfinder:
(74) Vertreter: Dantz, Jan Henning

(56) Entgegenhaltungen:
- EP-A- 0 632 962
- CH-A5- 561 022
- DE-A1- 2 705 909
- DE-U1- 29 804 430
- US-A- 4 927 003

## Beschreibung

Die vorliegende Erfindung betrifft eine Dragiervorrichtung zum Beschichten von schmelzbaren Materialien, insbesondere Schokolade, mit einem umlaufenden Band, auf dem zu beschichtende Gegenstände an einer durch das Band gebildeten Aufnahme angeordnet sind, wobei Mittel zum Zuführen von Beschichtungsmaterial zu den Gegenständen vorgesehen sind.

Aus der ES 2120950A1 ist eine Dragiervorrichtung zur Herstellung von Süßigkeiten bekannt, bei der ein umlaufendes Band vorgesehen ist, auf dem zu beschichtende Gegenstände aufgenommen sind, die dann über das Band umgewälzt werden. Durch das Umwälzen wird erreicht, dass zugeführtes Beschichtungsmaterial gleichmäßig auf die Oberfläche der Gegenstände verteilt wird. Das Beschichtungsmaterial wird meist durch schmelzbare Fluide, wie Schokolade gebildet, die dann nicht nur an den Gegenständen sondern auch an dem umlaufenden Band anhaftet. Beim Beschichten sammelt sich an dem Band daher eine Oberflächenschicht an, die nach dem Beschichtungsvorgang aufwendig zu entfernen ist. Insbesondere muss auch verbindert werden, dass durch Klumpen von Beschichtungsmaterial die Beschichtung der Gegenstände nicht mehr gleichmäßig erfolgt und diese untereinander verkleben.

Die DE 23 23 853 offenbart eine Dragiereinrichtung, bei der ein Dragierband an mehreren Umlenkwalzen umlaufend geführt ist. Um auf dem Dragierband abgelagerte Sprühmasse entfernen zu können, ist ein Abstreifmesser vorgesehen, um die anhaftende Masse mechanisch abzukratzen. Dadurch kann eine Beschädigung des Dragierbandes durch ein Verkleben mit der Dragiermasse und ein mögliches Festsetzen verhindert werden.

Die CH 561 022 offenbart eine weitere Dragiervorrichtung, bei der eine Ablagerung von Sprühmasse an der Dragiereinrichtung verhindert werden soll. Hierfür ist an dem Dragierband eine Heizeinrichtung vorgesehen, damit die Temperatur des Dragierbandes und der darauf befindlichen Sprühmasse in einem vorbestimmten Temperaturbereich gehalten wird.

Es ist daher Aufgabe der vorliegenden Erfindung eine Drugiervorrichtung zu schaffen, die eine Reinigung des umlaufenden Bandes vereinfacht und eine Bildung größerer Klumpen durch sich vom Band ablösende Beschichtungsmaterial vermeidet.

Diese Aufgabe wird mit einer Dragiervorrichtung mit den Merkmalen des Anspruches 1 gelöst.

Erfindungsgemäß ist benachbart zu dem umlaufenden Band ein beheizter leistenförmiger Abstreifer vorgesehen, mittels dem am Band anhaftendes Beschichtungsmaterial schmelzbar und zu den zu beschichtenden Gegenständen rück geführt wird. Dadurch wird vermieden, dass sich während eines Beschichtungsvorganges eine dicke Schicht auf dem Band ansammelt, sondern es wird über den Abstreifer nur soviel Beschichtungsmaterial an dem Band anhaften gelassen, das der Dragiervorgang nicht nachteilig beeinflusst wird. Durch den Abstreifer wird zudem gewährleistet, dass von dem Band entferntes Beschichtungsmaterial wieder geschmolzen und zu den zu beschichtenden Gegenständen rückgeführt wird. Dies ist einerseits materialsparend und andererseits wird das geschmolzene Beschichtungsmaterial in kleinen Mengen zu den Gegenständen zurückgeführt, so dass eine Khumpenbildung weitgehend vermieden wird.

Gemäß einer bevorzugten Ausgestaltung der Erfindung ist der Abstreifter bewegbar und der Abstand zwischen Band und Abstreifer veränderbar. Denn je nach Beschichtungsmaterial kann die Temperatur des Abstreifers sowie der Abstand zu dem Band speziell eingestellt werden, um ein optimales Beschichtungsergebnis zu erhalten. Der Abstand zwischen einer Spitze des Abstreifers und dem Band kann beispielsweise in einem Bereich zwischen 0,3 mm bis 2 mm, vorzugsweise zwischen 0,8 mm bis 1,5 mm eingestellt werden.

Um beim Vorbeilaufen des Bandes anhaftendes Beschichtungsmaterial lösen zu können, wird der Abstreifer vorzugsweise auf eine Temperatur zwischen 50°C und 100°C, insbesondere 70°C bis 80°C aufgeheizt, so dass zumindest ein Teil des Beschichtungsmaterials an dem Band schmilzt und leicht gelöst werden kann. Dabei können an dem Abstreifer ein oder mehrere Temperatursensoren angeordnet sein, um den Abstreifer durch eine Steuerung auf einem vorbestimmten Temperaturniveau halten zu können. Dies verhindert ein Überhitzen der Dragiermasse an dem Abstreifer.

Um zu gewährleisten, dass sich an dem Abstreifer keine Klumpen aus Beschichtungsmaterial bilden, kann der Abstreifer eine zu dem Band gewandte Spitze und eine senkrecht zur Bewegungsrichtung des Bandes verlaufende Nut aufweisen, wobei zwischen Nut und der Spitze eine stegförmige Ablagerungsfläche für das Beschichtungsmaterial gebildet ist. Diese stegförmige Ablagerungsfläche kann dann eine Breite zwischen 3 mm bis 10 mm, vorzugsweise 5 mm bis 8 mm aufweisen, so dass sich das Beschichtungsmaterial nur auf diesen kleinen Bereich der Ablagerungsfläche ansammeln kann. Aufgrund der Anordnung einer Nut kann das Beschichtungsmaterial nicht mehr anhaften und fällt dann nach unten auf die zu beschichtenden Gegenstände. Die Nut ist dabei an einer Unterseite des Abstreifers angeordnet und weist eine Breite und Tiefe auf, dass das Beschichtungsmaterial die Nut nicht überbrücken kann. Ferner kann das Band benachbart zu der Spitze des Abstreifers und die stegförmige Ablagerungsfläche einen Winkel von kleiner als 90°, vorzugsweise zwischen 50° und 80° einschließen, so dass sich das Beschichtungsmaterial leicht von dem Band löst und dieses auf die Ablagerungsfläche aufgeschoben wird, bis es sich von dem Abstreifer löst und wieder nach unten fällt.

Um eine gleichmäßige Temperaturverteilung zu gewährleisten, besteht der Abstreifer aus Metall, vorzugsweise aus Aluminium.

Die Dragiervorrichtung kann ferner eine Steuerung aufweisen, die abhängig vom Beschichtungsmaterial die Temperatur und den Abstand des Abstreifers von dem Band steuert. Zudem kann auch über mechanische, elektronische oder optische Erfassungsmittel die Dicke des auf dem Band abgelagerten Beschichtungsmaterials erfasst werden, um dann davon abhängig die Temperatur und den Abstand des Abstreifers von dem Band zu steuern. Mittels der Steuerung wird ferner ein automatisches Entfernen des Abstreifers vom Band gewährleistet, wenn das Band zum Stillstand kommt. Denn die Temperatur des Abstreifers ist meist schon in einem Bereich, der auch das meist aus Kunststoff bestehende umlaufende Band schmelzen könnte, wenn das Band über längere Zeit benachbart zu dem Abstreifer angeordnet ist.

Die Erfindung wird nachfolgend anhand eines Ausführungsbeispieles mit Bezug auf die beigefügten Zeichnungen näher erläutert. Es zeigen:

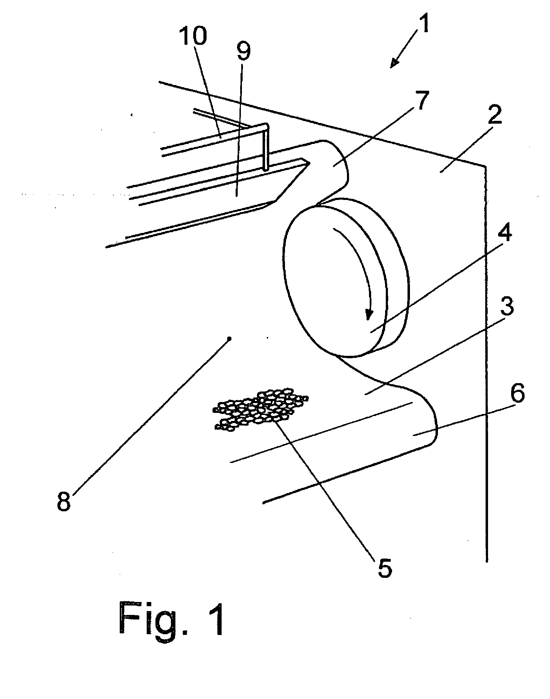

- Figur 1: eine perspektivische, schematische Ansicht einer erfindungsgemäßen Dragiervorrichtung;
- Figur 2: eine Seitenansicht der Dragiervorrichtung der Figur 1, und
- Figur 3: eine vergrößerte Detaildarstellung des Abstreifers der Dragiervorrichtung der Figur 1.

Eine Dragiervorrichtung 1 umfasst ein Gehäuse 2, innerhalb dem ein umlaufendes Band 3 vorgesehen ist. Das Band 3 kann aus stegförmigen Lamellen, Kettengliedern oder auch aus einem ebenen Band bestehen, das aus Metall, Kunststoff oder einer Mischung dieser Materialien hergestellt ist.

An gegenüberliegenden Seiten des Bandes 3 ist eine Scheibe 4 vorgesehen, an der das Band 3 zumindest bereichsweise anliegt, wobei die Scheiben 4 eine seitliche Begrenzung für eine Aufnahme 8 bilden. Das Band 3 ist über Walzen 6, 7 und 14 geführt, wobei benachbart zu einer vorderen Walze 6 das Band 3 zunächst leicht nach unten verläuft und dort eine Aufnahme 8 für zu beschichtende Gegenstände 5, beispielsweise Nüsse oder Süßigkeiten bildet.

Das Band 3 wird dann von der Aufnahme 8 nach oben um die Scheibe 4 zu der Walze 7 geführt, wobei benachbart zu der oberen Walze 7 ein beheizbarer Abstreifer 9 vorgesehen ist, der über ein Gestänge 10 gehalten ist und über mechanische, pneumatische oder hydraulische Antriebsmittel 11 bewegbar ist.

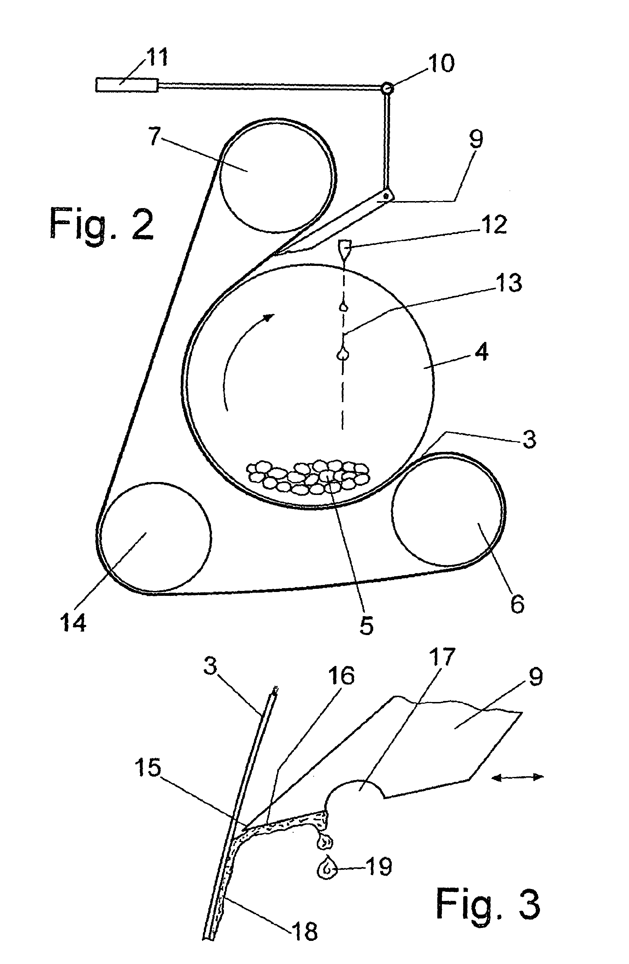

Wie in Figur 2 gezeigt ist, befindet sich oberhalb der Aufnahme 8 ein Mittel 12 zum Zuführen von Beschichtungsmaterial, wobei diese Mittel 12 als Reihe von Düsen ausgebildet sein kann, die über die gesamte Breite des Bandes 3 Beschichtungsmaterial auf die Gegenstände 5 aufbringen. Für die Beschichtung wird das Band 3 dann um die Walzen 6, 7 und 14 umlaufend bewegt, wodurch sich auch die zu beschichtenden Gegenstände 5 in der Aufnahme 8 umwälzen, so dass das herunterlaufende flüssige Beschichtungsmaterial 13 gleichmäßig auf die Gegenstände 5 verteilt wird.

Da das Beschichtungsmaterial 13 nicht nur an den Gegenständen 5 anhaftet, sondern auch an dem umlaufenden Band 3, bildet sich während des Beschichtungsvorganges eine Schicht auf dem Band 3 aus, die nach dem Dragiervorgang aufwendig gereinigt werden muss. Daher ist ein Abstreifer 9 aus Metall, vorzugsweise aus Aluminium vorgesehen, der oberhalb der Aufnahme 8 angeordnet ist und dessen Gestaltung in Figur 3 dargestellt ist.

Der Abstreifer 9 weist eine vordere Spitze 15 auf, die benachbart zu dem umlaufenden Band 3 beispielsweise in einem Abstand von 0,3 mm bis 2 mm angeordnet ist, so dass eine geringe Schicht an Beschichtungsmaterial auf dem Band 3 anhaften bleiben kann, je nach Abstand und Temperatur des Abstreifers 9. Sofern die Schichtdicke an dem Band 3 jedoch ein vorbestimmtes Maß überschreitet, wird das an dem Band 3 anhaftende Beschichtungsmaterial 18 über die Spitze 15 des Abstreifers 9 entfernt, wobei das Beschichtungsmaterial 18 aufgrund der Temperatur des Abstreifers 9, die beispielsweise in einem Bereich zwischen 70°C und 80°C liegt, zumindest teilweise geschmolzen wird und sich dann relativ leicht von dem Band 3 löst. Das anhaftende Beschichtungsmaterial 18 wird dabei an einer zur Spitze 15 benachbarten stegförmigen Ablagerungsfläche 16 angelagert, die eine Breite zwischen 5 mm bis 8 mm aufweist. Benachbart zu der Ablagerungsfläche 16 ist eine Nut 17 in dem Abstreifer 9 vorgesehen, die nach unten gerichtet ist und die eine Breite und Tiefe aufweist, vorzugsweise größer als 2 mm bis 3 mm, so dass anhaftendes Beschichtungsmaterial an der Ablagerungsfläche 16, das auf den Abstreifer 9 durch das nachfolgende Beschichtungsmaterial geschoben wird, nicht mehr am Abstreifer 9 anhaften bleiben kann, sondern geschmolzen wird und dann in zumindest teilweiser flüssiger Form als kleine Fluidteilchen 19 aufgrund der Schwerkraft wieder zu der Aufnahme 8 mit den zu beschichtenden Gegenständen 5 rückgeführt wird. Dadurch sinkt auch der Materialbedarf an Beschichtungsmaterial, da das sich an dem Band 3 festsetzende Beschichtungsmaterial wieder für die Beschichtung verwendet werden kann.

Die Dragiervorrichtung weist ferner eine Steuerung auf, um den Abstand und die Temperatur des Abstreifers 9 abhängig von vorgegebenen Parametern, wie dem Beschichtungsmaterial, der eingestellten zulässigen Schicht an Beschichtungsmaterial auf dem Band 3 etc. gesteuert werden kann. Durch das Anbringen von ein oder mehreren Temperatursensoren kann durch die Steuerung die Temperatur des Abstreifers in einem vorgegebenen Temperaturintervall geregelt werden, um ein optimales Beschichtungsergebnis zu erhalten.

Die Steuerung sieht ferner vor, dass bei Stillstand des Bandes 3, der Abstreifer 9 unmittelbar von dem Band 3 wegbewegt wird, so dass eine starke Erhitzung des Bandes 3 vermieden wird. Denn das meist aus Kunststoff bestehende Band 3 kann unmittelbar benachbart zu dem Abstreifer 9 soweit erhitzt werden, dass ebenfalls ein Anschmelzen stattfindet, was zu einer Beschädigung führt. Durch das Abheben des Abstreifers 9 von dem Band 3 kann dies sicher vermieden werden.

Als Beschichtungsmaterial wird vorzugsweise Schokolade eingesetzt, die auf Nüsse oder andere Gegenstände beschichtet wird. Aber auch andere fetthaltige Materialien können eingesetzt werden.

## Patentansprüche

1. Dragiervorrichtung (1) zum Beschichten von schmelzbaren Materialien, insbesondere Schokolade, mit einem umlaufenden Band (3), auf dem zu beschichtende Gegenstände (5) an einer durch das Band (3) gebildeten Aufnahme (8) angeordnet sind, wobei Mittel (12) zum Zuführen von Beschichtungsmaterial (13) zu den Gegenständen (5) vorgesehen sind, **dadurch gekennzeichnet, dass** benachbart zu dem umlaufenden Band (3) ein beheizter leistenförmiger Abstreifer (9) vorgesehen ist, mittels dem an Band (3) anhaftendes Beschichtungsmaterial (18) schmelzbar und zu den zu beschichtenden Gegenständen (5) rückgeführt wird.

2. Dragiervorrichtung nach Anspruch 1, **dadurch gekennzeichnet, dass** der Abstreifer (9) bewegbar ist und der Abstand zwischen Band (3) und Abstreifer (9) veränderbar ist.

3. Dragiervorrichtung nach Anspruch 1 oder 2, **dadurch gekennzeichnet, dass** der Abstand zwischen einer Spitze (15) des Abstreifers (9) und dem Band (3) zwischen 0,3 mm bis 2 mm, vorzugsweise zwischen 0,8 mm bis 1,5 mm liegt.

4. Dragiervorrichtung nach einem der Ansprüche 1 bis 3, **dadurch gekennzeichnet, dass** während des Beschichtens der Abstreifer eine Temperatur zwischen 50°C und 100°C, vorzugsweise zwischen 70°C und 80°C aufweist.

5. Dragiervorrichtung nach einem der Ansprüche 1 bis 4, **dadurch gekennzeichnet, dass** der Abstreifer (9) eine zu dem Band (3) gewandte Spitze (15) und eine senkrecht zur Bewegungsrichtung des Bandes (3) verlaufende Nut (17) aufweist, wobei zwischen Nut (17) und der Spitze (15) eine stegförmige Ablagerungsfläche (16) für Beschichtungsmaterial gebildet ist.

6. Dragiervorrichtung nach Anspruch 5, **dadurch gekennzeichnet, dass** die stegförmige Ablagerungsfläche (16) eine Breite von 3mm bis 10mm, vorzugsweise 5mm bis 8mm aufweist.

7. Dragiervorrichtung nach einem der Ansprüche 1 bis 6, **dadurch gekennzeichnet, dass** das Band (3) benachbart zu der Spitze (15) des Abstreifers (9) und die stegförmige Ablagerungsfläche (16) einen Winkel von kleiner als 90°, vorzugsweise zwischen 50° und 80° einschließen.

8. Dragiervorrichtung nach einem der Ansprüche 1 bis 7, **dadurch gekennzeichnet, dass** der Abstreifer (9) aus Metall, vorzugsweise aus Aluminium hergestellt ist.

9. Dragiervorrichtung nach einem der Ansprüche 1 bis 8, **dadurch gekennzeichnet, dass** eine Steuerung vorgesehen ist und abhängig vom Beschichtungsmaterial die Temperatur und der Abstand des Abstreifers (9) von dem Band (3) steuerbar ist.

10. Dragiervorrichtung nach einem der Ansprüche 1 bis 9, **dadurch gekennzeichnet, dass** mittels einer Steuerung ein automatisches Entfernen des Abstreifers (9) vom Band (3) beim Stillstand des Bandes (3) erfolgt.

## Claims

1. Coating device (1) for coating meltable materials, in particular chocolate, with a revolving band (3) on which articles (5) which are to be coated are arranged on a receptacle (8) formed by the band (3), wherein means (12) for supplying coating material (13) to the articles (5) are provided, **characterized in that** a heated, strip-shaped scraper (9) is provided adjacent to the revolving band (3), by means of which scraper coating material (18) adhering to the band (3) can be melted and returned to the articles (5) to be coated.

2. Coating device according to Claim 1, **characterized in that** the scraper (9) can be moved, and the distance between the band (3) and scraper (9) can be changed.

3. Coating device according to Claim 1 or 2, **characterized in that** the distance between a tip (15) of the scraper (9) and the band (3) is between 0.3 mm and 2 mm, preferably between 0.8 mm and 1.5 mm.

4. Coating device according to one of Claims 1 to 3, **characterized in that** the scraper has a temperature of between 50°C and 100°C, preferably between 70°C and 80°C, during the coating operation.

5. Coating device according to one of Claims 1 to 4, **characterized in that** the scraper (9) has a tip (15) facing the band (3) and a groove (17) running perpendicularly to the direction of movement of the band (3), with a web-shaped deposition surface (16) for coating material being formed between the groove (17) and the tip (15).

6. Coating device according to Claim 5, **characterized in that** the web-shaped deposition surface (16) has a width of 3 mm to 10 mm, preferably 5 mm to 8 mm.

7. Coating device according to one of Claims 1 to 6, **characterized in that** the band (3) adjacent to the tip (15) of the scraper (9) and the web-shaped deposition surface (16) enclose an angle of less than 90°, preferably of between 50° and 80°.

8. Coating device according to one of Claims 1 to 7, **characterized in that** the scraper (9) is produced from metal, preferably from aluminium.

9. Coating device according to one of Claims 1 to 8, **characterized in that** a control system is provided, and the temperature and the distance of the scraper (9) from the band (3) can be controlled in relation to the coating material.

10. Coating device according to one of Claims 1 to 9, **characterized in that** the scraper (9) is automatically moved away from the band (3) by means of a control system when the band (3) is at a standstill.

## Revendications

1. Dispositif de dragéification (1) destiné au revêtement de matériaux fusibles, en particulier de chocolat, avec une bande rotative (3), sur laquelle des objets à revêtir (5) sont disposés sur un logement (8) formé par la bande (5), des moyens (12) pour l'amenée de matériau de revêtement (13) aux objets (5) étant prévus, **caractérisé en ce qu'**à côté de la bande rotative (3) est prévu un racloir (9) chauffé, en forme de baguette, au moyen duquel du matériau de revêtement (18) adhérant sur la bande (3) peut être fondu et ramené aux objets à revêtir (5).

2. Dispositif de dragéification selon la revendication 1, **caractérisé en ce que** le racloir (9) peut être déplacé et **en ce que** la distance entre la bande (3) et le racloir (9) peut être modifiée.

3. Dispositif de dragéification selon la revendication 1 ou 2, **caractérisé en ce que** la distance entre une pointe (15) du racloir (9) et la bande (3) est comprise entre 0,3 et 2 mm, de préférence entre 0,8 et 1,5 mm.

4. Dispositif de dragéification selon l'une quelconque des revendications 1 à 3, **caractérisé en ce que** pendant le revêtement, le racloir présente une température comprise entre 50 et 100 °C, de préférence entre 70 et 80 °C.

5. Dispositif de dragéification selon l'une quelconque des revendications 1 à 4, **caractérisé en ce que** le racloir (9) présente une pointe (15) tournée vers la bande (3) et une rainure (17) s'étendant perpendiculairement au sens de déplacement de la bande (3), une surface de dépôt (16) en forme de barrette pour du matériau de revêtement étant formée entre la rainure (17) et la pointe (15).

6. Dispositif de dragéification selon la revendication 5, **caractérisé en ce que** la surface de dépôt (16) en forme de barrette présente une largeur comprise entre 3 et 10 mm, de préférence entre 5 et 8 mm.

7. Dispositif de dragéification selon l'une quelconque des revendications 1 à 6, **caractérisé en ce que** la bande (3) à côté de la pointe (15) du racloir (9) et la surface de dépôt en forme de barrette (16) forment un angle inférieur à 90 °, de préférence compris entre 50 et 80 °.

8. Dispositif de dragéification selon l'une quelconque des revendications 1 à 7, **caractérisé en ce que** le racloir (9) est fabriqué en métal, de préférence en aluminium.

9. Dispositif de dragéification selon l'une quelconque des revendications 1 à 8, **caractérisé en ce qu'**une commande est prévue et **en ce qu'**en fonction du matériau de revêtement, la température et la distance du racloir (9) par rapport à la bande (3) peuvent être commandées.

10. Dispositif de dragéification selon l'une quelconque des revendications 1 à 9, **caractérisé en ce que** le racloir (9) s'écarte automatiquement de la bande (3) lors de l'arrêt de cette dernière au moyen d'une commande.
